(19) Europäisches Patentamt
European Patent Office
Office européen des brevets

(11) EP 1 964 886 A1

(12) **EUROPEAN PATENT APPLICATION**
published in accordance with Art. 158(3) EPC

(43) Date of publication:
**03.09.2008 Bulletin 2008/36**

(21) Application number: **06843100.6**

(22) Date of filing: **22.12.2006**

(51) Int Cl.:
***C08L 23/16*** *(2006.01)* ***B29C 39/10*** *(2006.01)*
***B29C 65/70*** *(2006.01)* ***B60R 5/04*** *(2006.01)*
***B60R 13/06*** *(2006.01)*

(86) International application number:
**PCT/JP2006/325654**

(87) International publication number:
**WO 2007/072949 (28.06.2007 Gazette 2007/26)**

(84) Designated Contracting States:
**DE FR GB**

(30) Priority: **22.12.2005 JP 2005370992**

(71) Applicant: **JSR Corporation**
**Tokyo 104-8410 (JP)**

(72) Inventors:
- **KANAE, Kentarou**
  **Tokyo 104-8410 (JP)**
- **NAKANISHI, Hideo**
  **Tokyo 104-8410 (JP)**
- **TANAKA, Minoru**
  **Tokyo 104-8410 (JP)**

(74) Representative: **TBK-Patent**
**Bavariaring 4-6**
**80336 München (DE)**

# (54) MOLDED COMPOSITE MATERIAL AND PROCESS FOR PRODUCTION THEREOF

(57) A molded composite comprising a first molded part 11 and a second molded part 12 which is bonded to the surface and/or a cross-sectional surface of the first molded part 11 is disclosed. The first molded part 11 is obtained by extrusion foam molding of an olefin thermoplastic elastomer composition, comprising (A) an ethylene-α-olefin copolymer rubber having an intrinsic viscosity [η] of 3.5 to 6.8 dl/g as measured at 135°C in a decalin solvent, (B) a polyolefin resin, and (C) a mineral oil-based softener in a predetermined proportion and obtained by dynamically heat-treating a mixture of at least (A) the ethylene-α-olefin copolymer rubber and (B) the polyolefin resin in the presence of a cross-linking agent, at an expansion ratio of 1.2 times or more and the second molded part 12 is obtained by injection molding of the olefin thermoplastic elastomer composition and/or another thermoplastic elastomer composition and bonded to the surface and/or a cross-sectional surface of the first molded part 11.

FIG. 1

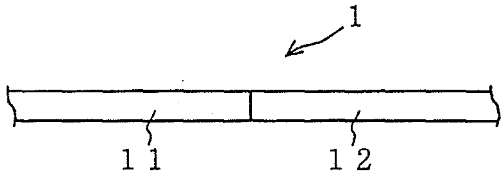


EP 1 964 886 A1

## Description

TECHNICAL FIELD

The present invention relates to a molded composite and a process for producing the molded composite. More particularly, the present invention relates to a molded composite having excellent compression set, flexibility, adhesiveness between the molded parts, and material recyclability, and a process for producing such a molded composite.

BACKGROUND ART

Products such as a weather strip for vehicles and a gasket for building materials are generally made from a vulcanized rubber. Such a rubber product may have a complicated structure in which straight line portions and curvilinear portions are combined according to the purpose, the application, and the like. As a vulcanized rubber used as the raw material, rubber compositions disclosed in Patent Documents 1 to 3, for example, can be given.
Rubber products having such a complicated structure are produced by a method of feeding a rubber composition for vulcanization into a die with a shape corresponding to the shape of the target product and treating the rubber composition with heat, a method of previously forming either the straight line portion or the curvilinear portion, feeding the rubber composition for vulcanization into a die for forming the other portion, and treating with heat to simultaneously vulcanize the rubber composition and bond the straight line portion with the curvilinear portion, and the like. The latter method is carried out according to the following procedure. The straight line portion previously produced by extrusion molding or the like is placed in a die cavity, and the rubber composition for forming the curvilinear portion is introduced into the die cavity so as to come in contact with the end of the straight line portion. The die cavity is then put into a die which is heated to about 160 to 180°C to effect a vulcanization reaction for three to five minutes, whereby the curvilinear portion is formed to produce a molded composite (composite member) in which the straight line portion and the curvilinear portion are bonded.
When the straight line portion and the curvilinear portion are separately produced, a reaction for a sufficient period of time at high temperature is necessary in order to complete the vulcanization. However, precautions must be taken when the rubber product is taken out from the die before the temperature decreases after vulcanization. On the other hand, a considerable period of time is required for cooling before the rubber product is taken out from the die. Therefore, it is necessary to reduce the cooling time and increase the yield of rubber product. The rubber product produced by the above-described method may not have sufficient bonding strength of the straight line portion and the curvilinear portion. Furthermore, the rubber composition used for vulcanization contains additives such as a vulcanization accelerator. For this reason, die staining by corrosion and the like may proceed along with an increase in the number of times of use of the die.
Due to increased attention to environmental problems in recent years, development of a composite material excelling in recyclability is desired. However, a composite material of which a part or the whole is formed from a vulcanized rubber is difficult to recycle. In addition, since such a composite material does not necessarily have good wear resistance, it is difficult to use this material in locations coming in contact with or being rubbed against the other parts.
[Patent Document 1] JP-A-10-175440
[Patent Document 2] JP-A-2000-7293 5
[Patent Document 3] JP-A-2002-322328

DISCLOSURE OF THE INVENTION

The present invention has been achieved in view of these problems of the related art, and the present invention aims to provide a molded composite having excellent compression set, adhesiveness between the molded parts, folding peelability between the molded parts, flexibility, material recyclability, and external appearance, and a process for producing the molded composite possessing such excellent characteristics in a short period of time in a safe manner.
The inventors of the present invention have conducted extensive studies in order to achieve the above object. As a result, the inventors have found that the above object can be achieved by bonding a molded part obtained by injection molding of a specific thermoplastic elastomer composition and a molded part obtained by extrusion foam molding of the thermoplastic elastomer composition. This finding has led to the completion of the present invention.
That is, the following molded composites and processes for producing the molded composite are provided according to the present invention.
[1] A molded composite comprising a first molded part which is obtained by extrusion foam molding of an olefin thermoplastic elastomer composition comprising 5 to 60 mass% of (A) an ethylene-α-olefin copolymer rubber having an intrinsic viscosity [η] of 3.5 to 6.8 dl/g as measured at 135°C in a decalin solvent, 1 to 20 mass% of (B) a polyolefin resin, and 30 to 94 mass% of (C) a mineral oil-based softener ((A) + (B) + (C) =100 mass%) and obtained by dynamically heat-treating a mixture of at least (A) the ethylene-α-olefin copolymer rubber and (B) the polyolefin resin in the presence of a cross-linking agent, at an expansion ratio of 1.2 times or more and a second molded part which is obtained by injection molding of the olefin thermoplastic elastomer composition and/or another thermoplastic elastomer composition and bonded to the surface and/or a cross-sectional surface of the first molded part.

[2] The molded composite according to [1], wherein the olefin thermoplastic elastomer composition further comprises 0.1 to 10 parts by mass of organopolysiloxane per 100 parts by mass of the total of the ethylene-α-olefin copolymer rubber (A), the polyolefin resin (B), and the mineral oil-based softener (C).

[3] The molded composite according to [1] or [2], wherein the first molded part has an Asker C hardness measured according to JIS K6253 of 80 or less.

[4] The molded composite according to any one of [1] to [3], wherein the first molded part has a hollow shape.

[5] The molded composite according to [4], wherein the first molded part with a hollow shape has a compression set of 50% or less after being compressed to 50% for 22 hours at 70°C.

[6] The molded composite according to any one of [1] to [5], wherein the first molded part has a reinforcing component on the outer surface and/or on the inside.

[7] The molded composite according to any one of [1] to [6], having any one of the following structures [1] to [4],

[Expression 1]

[1] [(P) − (Q)] m
[2] (P) − [(Q) − (P)] m
[3] (Q) − [(P) − (Q)] m
[4] [(P) − (Q)] n (closed ring)

wherein (P) indicates the first molded part, (Q) indicates the second molded part, m is an integer of 1 or more, and n is an integer of 2 or more.

[8] The molded composite according to any one of [1] to [7], having an annular structure in which the end of the first

molded part bonds to the end of the second molded part.

[9] The molded composite according to any one of [1] to [8] which is an automotive interior material or an automotive exterior material.

[10] The molded composite according to [9] which is a weather strip.

[11] A process for producing a molded composite comprising a step of obtaining a molded member having an expansion ratio of 1.2 times or more by extrusion foam molding of an olefin thermoplastic elastomer composition, which comprises 5 to 60 mass% of (A) an ethylene-$\alpha$-olefin copolymer rubber having an intrinsic viscosity [$\eta$] of 3.5 to 6.8 dl/g as measured at 135°C in a decalin solvent, 1 to 20 mass% of (B) a polyolefin resin, and 30 to 94 mass% of (C) a mineral oil-based softener ((A) + (B) + (C) = 100 mass%) and obtained by dynamically heat-treating a mixture of at least (A) the ethylene-$\alpha$-olefin copolymer rubber and (B) the polyolefin resin in the presence of a cross-linking agent, a step of placing the resultant molded member in a die cavity so that the surface and/or the cross-sectional surface thereof are exposed, and a step of introducing the olefin thermoplastic elastomer composition and/or another thermoplastic elastomer composition into the die cavity by injection.

The molded composite of the present invention has excellent compression set, adhesiveness between the molded parts, folding peelability between the molded parts, flexibility, material recyclability, and external appearance.

According to the process of the present invention, a molded composite having excellent compression set, adhesiveness between the molded parts, folding peelability between the molded parts, flexibility, material recyclability, and external appearance can be produced in a short time in a safe manner.

BRIEF DESCRIPTION OF THE DRAWINGS

[FIG 1] FIG 1 is a schematic drawing showing a part of one embodiment (weather strip) of a molded composite of the present invention.
[FIG 2] FIG 2 is a schematic drawing showing a part of another embodiment (weather strip) of weather strip of the present invention.
[FIG 3] FIG 3 is a schematic drawing showing an example of the molded composite (weather strip) attached to a door of an automobile.

EXPLANATION OF REFERENCE NUMERALS

| | |
|---|---|
| 1 and 2 | Weather strip |
| 3 | Door of automobile |
| 11, 11a to 11e | First molded part |
| 12, 12a to 12e | Second molded part |

BEST MODE FOR CARRYING OUT THE INVENTION

The best embodiments of the present invention are described below. Note that the present invention is not limited to the following embodiments. Various modifications and improvements may be made to the embodiments without deviating from the gist of the present invention based on ordinary knowledge of a person skilled in the art.

1. Molded composite

FIG 1 is a schematic drawing showing a part of one embodiment of a molded composite (weather strip) of the

present invention. The molded composite of the embodiment (weather strip 1) has a first molded part 11 obtained by extrusion foam molding of an olefin thermoplastic elastomer composition and a second molded part 12 obtained by injection molding of the olefin thermoplastic elastomer composition and/or another olefin thermoplastic elastomer composition and bonded to the surface and/or the cross-section of the first molded part 11. The olefin thermoplastic elastomer composition used as the forming material includes an ethylene-α-olefin copolymer rubber (A) (hereinafter referred to from time to time as "component (A)" or "EAO copolymer rubber"), a polyolefin resin (B) (hereinafter referred to from time to time as "component (B)"), and a mineral oil-based softener (C) (hereinafter referred to from time to time as "component (C)"). The molded composite of the present invention will be described in detail.

((A) Ethylene-α-olefin copolymer rubber)

The component (A) is an ethylene-α-olefin copolymer rubber. The component (A) has an intrinsic viscosity [η] as measured at 135°C in a decalin solvent, of 3.5 dl/g or more, preferably 3.8 dl/g or more, and more preferably 4.0 to 7.0 dl/g. If the intrinsic viscosity is less than 3.5 dl/g, the mineral oil-based softener may bleed out from the resulting olefin thermoplastic elastomer composition or rubber elasticity may decrease.

As a specific example of the component (A), a copolymer including an ethylene monomer unit (a1) and an α-olefin monomer unit (excluding ethylene) (a2) can be given.

The content of the ethylene monomer unit (al) is preferably 35 to 95 mol%, more preferably 40 to 90 mol%, and particularly preferably 45 to 85 mol% of 100 mol% of the total of monomer units which form the component (A). If the content of the ethylene monomer unit (a1) is less than 35 mol%, the mechanical strength tends to be insufficient. If the content of the ethylene monomer unit (a1) is more than 95 mol%, the flexibility of the olefin thermoplastic elastomer composition tends to be insufficient.

As the α-olefin which forms the ethylene-α-olefin monomer unit (a2), α-olefins having 3 or more carbon atoms are preferable. As specific examples, propylene, 1-butene, 2-butene, isobutene, 1-pentene, 2-methyl-1-butene, 2-methyl-2-butene, 3-methylbutene, 1-hexene, 4-methyl-1-pentene, 3-methyl-1-pentene, 1-heptene, 1-octene, 1-decene, 1-undecene, and the like can be given. These α-olefins may be used either individually or in combination of two or more. Of these, α-olefins having 3 to 10 carbon atoms are preferable. The use of α-olefins having 3 to 10 carbon atoms is preferable because the component (A) can more easily copolymerize with other monomers when the component (A) contains monomer units other than ethylene and α-olefins. More preferable α-olefins are propylene, 1-butene, 1-hexene, and 1-octene, with propylene and 1-butene being particularly preferable.

The content of the α-olefin monomer unit (a2) is preferably 5 to 65 mol%, more preferably 10 to 45 mol%, and particularly preferably 15 to 40 mol% of 100 mol% of the total of monomer units which form the component (A). If the content of the α-olefin monomer unit (a2) is less than 5 mol%, the resulting olefin thermoplastic elastomer composition may not exhibit desired rubber elasticity. If the content of the α-olefin monomer unit (a2) is more than 65 mol%, the resulting olefin thermoplastic elastomer composition may exhibit a decreased durability.

The component (A) may be a binary copolymer consisting of the ethylene monomer unit (a1) and the α-olefin monomer unit (a2) or may be another copolymer (ternary copolymer, quaternary copolymer, etc.) consisting of these monomer units (a1) and (a2) and another monomer unit (a3). As examples of the other monomer unit (a3), a monomer unit of a non-conjugated diene compound and the like can be given.

Examples of the non-conjugated diene compounds which form the other monomer unit (a3) are linear non-cyclic diene compounds such as 1,4-hexadiene, 1,5-hexadiene, and 1,6-hexadiene; branched linear non-cyclic diene compounds such as 5-methyl-1,4-hexadiene, 3,7-dimethyl-1,6-octadiene, 5,7-dimethylocta-1,6-diene, 3,7-dimethyl-1,7-octadiene, 7-methylocta-1,6-diene, and dihydromyrcene; alicyclic diene compounds such as tetrahydroindene, methyltetrahydroindene, dicyclopentadiene, bicyclo[2.2.1]-hepta-2,5-diene, 5-methylene-2-norbornene, 5-ethylidene-2-norbornene, 5-propenyl-2-norbornene, 5-isopropylidene-2-norbornene, 5-cyclohexylidene-2-norbornene, and 5-vinyl-2-norbomene; and the like. These non-conjugated diene compounds may be used either individually or in combination of two or more. Among these, 1,4-hexadiene, dicyclopentadiene, and 5-ethylidene-2-norbornene are preferable.

The content of the other monomer unit (a3) contained in the component (A) is preferably 10 mol% or less, and more preferably 1 to 8 mol% of 100 mol% of the total of monomer units which form the component (A). If the content of the other monomer unit (a3) is more than 10 mol%, the resulting olefin thermoplastic elastomer composition may exhibit a decreased durability.

The component (A) may be a halogenated copolymer in which some of the hydrogen atoms in the molecule are substituted with halogen atoms such as a chlorine atom, a bromine atom, and the like. A graft polymer obtained by polymerizing unsaturated monomers such as vinyl chloride, vinyl acetate, (meth)acrylic acid, (meth)acrylic acid derivatives (methyl (meth)acrylate, glycidyl (meth)acrylate, (meth)acrylamide, etc.), maleic acid, maleic acid derivatives (maleic anhydride, maleimide, dimethyl maleate, etc.), and conjugated diene compounds (butadiene, isoprene, chloroprene, etc.) with the ethylene-α-olefin copolymer rubber can also be used. The components (A) mentioned above can be used individually or in combination of two or more.

The content of the component (A) in the olefin thermoplastic elastomer composition used for producing the weather strip of the embodiment is 5 to 60 mass%, preferably 10 to 58 mass%, and more preferably 15 to 55 mass% of the total amount of the component (A), the component (B), and the component (C). If the content of the component (A) is less than 5 mass%, the component (C) may bleed out. If the content of the component (A) is more than 60 mass%, the flexibility of the olefin thermoplastic elastomer composition may be insufficient.

An oil extended rubber (X) including the component (A) and the mineral oil-based softener (C) may also be used as the component (A). As the ethylene-α-olefin copolymer rubber included in the oil-extended rubber (X), the component (A) mentioned above may be used as it is. The content of the component (A) and the mineral oil-based softener (C) contained in the oil-extended rubber (X) is preferably 20 to 80 mass%, more preferably 25 to 75 mass%, and particularly preferably 30 to 70 mass% of 100 mass% of the total amount of the component (A), the mineral oil-based softener (C), and the oil-extended rubber (X).

In case of using an oil-extended rubber (X), the content of the oil-extended rubber (X) contained in the olefin thermoplastic elastomer composition is preferably 5 to 60 mass%, more preferably 10 to 58 mass%, and particularly preferably 15 to 55 mass% when the total amount of the oil-extended rubber (X), the component (B), and the component (C) is taken as 100 mass%. If the content of the oil-extended rubber (X) is less than 5 mass%, the mineral oil-based softener (C) may bleed out. If the content of the oil-extended rubber (X) is more than 60 mass%, the flexility of the olefin thermoplastic elastomer composition may be insufficient.

((B) Polyolefin resin)

The component (B) is a polyolefin resin. The component (B) may be a homopolymer or a copolymer containing one or more monomer units of α-olefins in a proportion of more than 50 mol%. In the case of a copolymer, such a copolymer may be either a copolymer of α-olefins or a copolymer of α-olefins and other monomers copolymerizable with the α-olefins. As the component (B), (B-a) an α-olefin-containing crystalline thermoplastic resin (hereinafter referred from time to time as "component (B-a)" and /or (B-b) an α-olefin-containing amorphous thermoplastic resin (hereinafter referred from time to time as "component (B-b)" may be used.

((B-a) α-olefin-containing crystalline thermoplastic resin)

The component (B-a) is a polymer containing a structural unit (b1) originating from an α-olefin. The crystallinity of the component (B-a) measured by X-ray diffraction is 50% or more, preferably 53% or more, and more preferably 55% or more. The crystallinity is closely related to the density. For example, when the α-olefin-containing crystalline thermoplastic resin is polypropylene, the density of the α-type crystals (monoclinic system) is 0.936 g/cm$^3$, the density of smectic microcrystals (pseudohexagonal crystal) is 0.886 g/cm$^3$, and the density of an amorphous (atactic) component is 0.850 g/cm$^3$. When the α-olefin-containing crystalline thermoplastic resin is poly-1-butene, the density of the isotactic crystal component is 0.91 g/cm$^3$ and the density of the amorphous (atactic) component is 0.87 g/cm$^3$.

Accordingly, the density of the component (B) is preferably 0.89 g/cm$^3$ or more, and preferably 0.90 to 0.94 g/cm$^3$. The crystallinity of 50% or more can be ensured by the density of 0.89 g/cm$^3$ or more. If the crystallinity of the component (B-a) is less than 50% and/or the density is less than 0.89 g/cm$^3$, the resulting molded parts tend to have decreased heat resistance, strength, and the like.

The α-olefin forming the structural unit (b1) has preferably 2 to 12 carbon atoms. More preferable α-olefins are propylene and 1-butene. The proportion of the structural unit (b1) contained in the component (B-a) is preferably 60 mol% or more, more preferably 80 mol% or more, and particularly preferably 90 to 100 mol% of 100 mol% of all structural units. If the proportion is less than 60 mol%, compatibility with the ethylene-α-olefin copolymer rubber tends to decrease.

The component (B-a) may be a copolymer containing other structural units (b2) in addition to the structural unit (b1). The cpolymer may be either a block copolymer or a random copolymer. However, when the component (B-a) is a block copolymer, in order to make the crystallinity of the block copolymer 50% or more, the proportion of the structural unit (b2) is preferably 40 mol% or less, more preferably 20 mol% or less, and particularly preferably 10 mol% or less of 100 mol% of all the structural units. This block copolymer can be obtained by living polymerization using a Ziegler-Natta catalyst, for example.

In case that the component (B-a) is a random copolymer, in order to make the crystallinity of the random copolymer 50% or more, the proportion of the structural unit (b2) is preferably 15 mol% or less, and more preferably 10 mol% or less when all he structural units are taken as 100 mass%. The random copolymer can be obtained by polymerizing an α-olefin and the like in the presence of a catalyst component containing, for example, a Ziegler-Natta catalyst, a soluble vanadium compound, an organoaluminum compound, and a solvent. For polymerization, polymerization under medium or low pressure conditions such as gas phase polymerization (a fluid bed or stirring bed), liquid polymerization (a slurry method or solution method), and the like can be used. A molecular weight modifier such as hydrogen gas can be optionally used for the polymerization.

As the soluble vanadium compound contained in the catalyst component, a reaction product of an alcohol and either $VOCl_3$ or $VCl_4$, or both is preferably used. As the alcohol, methanol, ethanol, n-propanol, isopropanol, n-butanol, sec-butanol, t-butanol, n-hexanol, n-octanol, 2-ethylhexanol, n-decanol, n-dodecanol, and the like can be given. Of these, alcohols with a carbon atom content of 3 to 8 are preferably used.

As examples of the organoaluminum compound included in the catalyst component, triethylaluminum, triisobutylaluminum, tri-n-hexylaluminum, diethylaluminum monochloride, diisobutylaluminum monochloride, ethylaluminum sesquichloride, butylaluminum sesquichloride, ethylaluminum dichloride, butylaluminum dichloride, methylaluminoxane which is a reaction product of trimethylaluminum and water, and the like can be given. Of these, ethylaluminum sesquichloride, butylaluminum sesquichloride, a mixture of ethylaluminum sesquichloride and triisobutylaluminum, and a mixture of triisobutylaluminum and butylaluminum sesquichloride are preferable.

As the solvent included in the catalyst component, a hydrocarbon is preferable. Among the hydrocarbons, n-pentane, n-hexane, n-heptane, n-octane, isooctane, and cyclohexane are more preferable. These solvents may be used either individually or in combination of two or more.

The maximum peak temperature (melting point) of the component (B-a) measured using a differential scanning calorimeter is preferably 100°C or more, and more preferably 120°C or more. If the melting point of the component (B-a) is less than 100°C, the resulting molded parts tend to have insufficient heat resistance and mechanical strength.

The melt flow rate (MRF) at a temperature of 230°C and a load of 2.16 kg of the component (B-a) is preferably from 0.1 to 1000 g/10 min, more preferably from 0.5 to 500 g/10 min, and particularly preferably from 1 to 100 g/10 min. If the MFR of the component (B-a) is less than 0.1 g/10 min, kneading processability and extrusion processability of the olefin thermoplastic elastomer composition may be insufficient. If more than 1000 g/10 min, mechanical strength of the molded parts tends to decrease.

Therefore, a preferable component (B-a) has crystallinity of 50% or more, a density of 0.89 g/$cm^3$ or more, the content of structural units other than the structural unit (b1) of 20 mol% or less, a melting point of 100°C or more, and MFR of 0.1 to 100 g/10 min. Polypropylene or a propylene-ethylene copolymer having a melting point of 140 to 170°C is particularly preferable. Two or more types of the component (B-a) may be used in combination.

((B-b) $\alpha$-Olefin-containing amorphous thermoplastic resin)

The component (B-b) contains a structural unit (b3) originating from an $\alpha$-olefin, and has a crystallinity measured by X-ray diffraction of less than 50%, preferably 30% or less, and more preferably 20% or less. The density of the component (B-b) is preferably 0.85 to 0.89 g/$cm^3$, and more preferably 0.85 to 0.88 g/$cm^3$.

The $\alpha$-olefin forming the structural unit (b3) has preferably 3 or more carbon atoms, and more preferably 3 to 12 carbon atoms. The proportion of the structural unit (b3) contained in the $\alpha$-olefin amorphous thermoplastic resin is preferably 60 mol% or more of 100 mol% of all structural units. If the proportion is less than 60 mol%, compatibility with the ethylene-$\alpha$-olefin copolymer rubber tends to decrease.

As specific examples of the component (B-b), homopolymers such as atactic polypropylene and atactic poly-1-butene, copolymers of more than 50 mol% of propylene and other $\alpha$-olefins (ethylene, 1-butene, 1-pentene, 1-hexene, 4-methyl-1-pentene, 1-octene, 1-decene, etc.), copolymers of more than 50 mol% of 1-butene and other $\alpha$-olefins (ethylene, propylene, 1-pentene, 1-hexene, 4-methyl-1-pentene, 1-octene, 1-decene, etc.), and the like can be given. Atactic polypropylene, a propylene-ethylene copolymer with a 50 mol% or more propylene content, and a propylene-1-butene copolymer with a 50 mol% or more propylene content are particularly preferable.

Atactic polypropylene and atactic poly-1-butene can be obtained by polymerization using a zirconocene compound-methylaluminoxane catalyst. Atactic polypropylene can also be obtained as a byproduct of the polypropylene described above as an example of the component (B-a).

When the component (B-b) is a copolymer, such a copolymer may be either a block copolymer or a random copolymer. However, in the case of a block copolymer, the structural unit (b3) contained in an amount in excess of 50 mol% must be bonded by the atactic structure. This block copolymer can be obtained by living polymerization using a Ziegler-Natta catalyst, for example. The random copolymer can be obtained in the same manner as the component (B-a). When the component (B-b) is a copolymer of an $\alpha$-olefin having 3 or more carbon atoms and ethylene, the proportion of the structural unit (b3) is preferably 60 to 100 mol% of 100 mol% of all structural units. If the proportion is less than 60 mol%, compatibility with the ethylene-$\alpha$-olefin copolymer rubber tends to decrease.

A number average molecular weight (Mn) of the component (B-b) measured by GPC is preferably from 1,000 to 20,000 in terms of polystyrene conversion, and more preferably from 1,500 to 15,000. If the Mn of the component (B-b) is less than 1,000, the mechanical strength tends to decrease. If it is more than 20,000, flexibility tends to decrease. Two or more types of the component (B-b) may be used in combination.

The content of the component (B) in the olefin thermoplastic elastomer composition used for producing the molded composite of the embodiment is 1 to 20 mass%, preferably 3 to 18 mass%, and more preferably 5 to 15 mass% of the total amount of the component (A), the component (B), and the component (C). If the content of the component

(B) is less than 1 mass%, the kneading processability tends to be poor. If the content of the component (B) is more than 20 mass%, the flexibility of the resulting olefin thermoplastic elastomer composition may be insufficient.

Inclusion of the component (B-b) in the olefin thermoplastic elastomer composition used for producing the molded composite of the embodiment is preferable for improving injection thermal fusibility. The amount of the component (B-b) in the olefin thermoplastic elastomer composition is preferably 0.5 mass% or more, more preferably 1 mass% or more, and particularly preferably 3 mass% or more. The content of the component (B-b) may be, but not limited to, 15 mass% or less.

((C) Mineral oil softener)

The component (C) is a mineral oil softener. There are no specific limitations on the component (C) insofar as the component (C) is a mineral oil softener commonly used for rubber products and the like. Specifically, paraffinic, naphthenic, or aromatic mineral oil softeners can be given as preferable examples.

A mineral oil softener is usually a mixture of aromatic rings, naphthenic rings, and paraffinic chains. Hydrocarbons in which the content of carbon atoms in paraffinic chains is 50% or more of the total carbon atoms are classified as paraffinic mineral oils; hydrocarbons in which the content of carbon atoms in naphthenic rings is 30 to 45% of the total carbon atoms are classified as naphthenic mineral oils; and hydrocarbons in which the content of carbon atoms in aromatic rings is 30% or more of the total carbon atoms are classified as aromatic mineral oils. The paraffinic mineral oil, naphthenic mineral oil, and aromatic mineral oil may be used individually or in combination of two or more. Among these, a paraffinic mineral oil is preferable, with a hydrogenated paraffinic mineral oil being particularly preferable. As examples of the paraffinic mineral oils, "Diana Process Oil PW90", "Diana Process Oil PW380" manufactured by Idemitsu Kosan Co., Ltd., and the like can be given.

A weight average molecular weight (Mw) of the component (C) measured by GPC is preferably from 300 to 2000 in terms of polystyrene conversion, and more preferably from 500 to 1500. The kinetic viscosity at 40°C of the component (C) is preferably 20 to 800 cSt, and more preferably 50 to 600 cSt. The pour point of the component (C) is preferably from -40 to 0°C, and more preferably from -30 to 0°C. The component (C) may be used in combination with low molecular weight hydrocarbons such as polybutene hydrocarbons and polybutadiene hydrocarbons, and the like.

The content of the component (C) in the olefin thermoplastic elastomer composition used for producing the molded composite of the embodiment is 30 to 94 mass%, preferably 32 to 87 mass%, and more preferably 35 to 80 mass% when the total amount of the component (A), the component (B), and the component (C) is taken as 100 mass%. If the content of the component (C) is less than 30 mass%, the flexibility of the resulting olefin thermoplastic elastomer composition may be insufficient. If the content of the component (C) is more than 94 mass%, the strength of the olefin thermoplastic elastomer composition may be insufficient, and the component (C) may bleed out.

((D) Organopolysiloxane)

It is preferable that the olefin thermoplastic elastomer composition further contains (D) organopolysiloxane (hereinafter referred to from time to time as "component (D)". Inclusion of the component (D) in the olefin thermoplastic elastomer composition ensures a molded composite of the embodiment with very high wear resistance and makes it unnecessary to apply a surface treating agent such as silicone paint to the surface. As specific examples of the component (D), (D1) unmodified organopolysiloxane (hereinafter referred from time to time as "component (D1)") and (D2) a vinyl group-containing organopolysiloxane (hereinafter referred from time to time as "component (D2)") can be given.

((D1) Unmodified organopolysiloxane)

Although not specifically limited, dimethylpolysiloxane, methylphenylpolysiloxane, fluoropolysiloxane, tetramethyltetraphenylpolysiloxane, methylhydrogenpolysiloxane, and the like can be given as examples of the component (D1). Of these, dimethylpolysiloxane is preferable.

The viscosity of the component (D1) at 25°C according to JIS K2283 is preferably less than 100,000 cSt, more preferably less than 70,000 cSt, and particularly preferably less than 50,000 cSt. If the viscosity of the component (C1) at 25°C according to JIS K2283 is more than 100,000 cSt, initial sliding properties tend to decrease.

The amount of the component (D1) is preferably 0.1 to 10 parts by mass, more preferably 1 to 8 parts by mass, and particularly preferably 1 to 5 parts by mass for 100 parts by mass of the total of the component (A) and the component (B) (or the total of the oil-extended rubber (X) and the component (B)). If the amount of the component (D1) is less than 0.1 part by mass for 100 parts by mass of the total of the component (A) and the component (B) (or the total of the oil-extended rubber (X) and the component (B)), initial sliding properties tend to be poor. If the amount is more than 10 parts by mass, on the other hand, there may be a case in which the external appearance of the molded composite is poor or a case in which bleed out occurs.

The component (D1) may be dynamically melt-kneaded together with the component (A) and the component (B) (and optionally the component (C)) in the presence of a cross-linking agent, or may be added to a mixture of the component (A) and the component (B) (and optionally the component (C)) which has been dynamically melt-kneaded in the presence of a cross-linking agent. The method of adding the component (D1) to the olefin thermoplastic elastomer composition is not particularly limited.

((D2) Vinyl group-containing organopolysiloxane)

The component (2) is a vinyl group-containing organopolysiloxane having a polymerization degree of 500 to 10,000 shown by the following formula (1).
[Formula I]

$$R_aSiO_{\frac{4-a}{2}} \qquad (1)$$

wherein R is a substituted or unsubstituted monovalent organic group, of which 0.02 to 10 mol% is a vinyl group, and a is a number from 1.900 to 2.004.
Although the major part of the component (D2) is a linear organopolysiloxane, a part of the organopolysiloxane may have a branched structure or may have a three dimensional structure. The component (D2) may also be a homopolymer, a copolymer, or a mixture of the homopolymer and copolymer. As specific examples of the substituted or unsubstituted monovalent organic group (R) in the average composition of the component (D2), a methyl group, an ethyl group, a propyl group, a vinyl group or a phenyl group, or a halogen-substituted hydrocarbon groups of these groups, and the like can be given. Among these monovalent organic groups indicating R, preferably 0.02 to 10 mol% and more preferably 0.05 to 5 mol% is a vinyl group. If the proportion of the vinyl group in R is less than 0.02 mol%, the reaction with a cross-linking agent is insufficient, and durability and wear resistance of the molded parts tend to decrease. On the other hand, if the proportion of the vinyl group in R is more than 10 mol%, the cross-linking reaction rapidly proceeds, resulting in an unevenly kneaded state, which tends to affect the properties of the resulting olefin thermoplastic elastomer composition.
The value of a in the above average composition formula (1) is from 1.900 to 2.004, and preferably from 1.950 to 2.002. If the value is lower than 1.900, it may be difficult to obtain good mechanical strength, heat resistance, and the like of the molded parts. If the value of a is higher than 2.004, it may be difficult to obtain an organopolysiloxane with a sufficient degree of polymerization.
The polymerization degree of the organopolysiloxane is from 500 to 10,000, and preferably from 1,000 to 8,000. If the polymerization degree is less than 500, it may be difficult to obtain good mechanical strength of the molded parts. On the other hand, the organopolysiloxane with a polymerization degree of more than 10,000 can be produced only with difficulty. The molecular chain terminal of the organopolysiloxane may be sealed with a hydroxyl group, an alkoxy group, a trimethylsilyl group, a dimethylvinylsilyl group, a methylphenylvinylsilyl group, a methyldiphenylsilyl group, or the like.
The amount of the component (D2) is preferably 0.1 to 10 parts by mass, more preferably 1 to 8 parts by mass, and particularly preferably 1 to 5 parts by mass for 100 parts by mass of the total of the component (A) and the component (B) (or the total of the oil-extended rubber (X) and the component (B)). If the amount of the component (D2) is less than 0.1 part by mass for 100 parts by mass of the total of the component (A) and the component (B) (or the total of the oil-extended rubber (X) and the component (B)), initial sliding properties tends to be poor. If the amount is more than 10 parts by mass, on the other hand, there may be a case in which the external appearance of the molded composite is poor.
The component (D2) may be dynamically melt-kneaded together with the component (A) and the component (B) (and optionally with the component (C)) in the presence of a cross-linking agent, or may be added to a mixture of the component (A) and the component (B) (and optionally with the component (C)) which has been dynamically melt-kneaded in the presence of a cross-linking agent. That is, the method of adding the component (D2) to the olefin thermoplastic elastomer composition is not particularly limited.

(Other polymer components)

The olefin thermoplastic elastomer composition may contain other polymer components in addition to the component (A), component (B), and component (C). Any polymers can be used as the other polymer components without specific limitations insofar as such polymers do not impair the mechanical strength, flexibility, and the like of the resulting thermoplastic elastomer composition.

As such polymer components, ionomer resin, aminoacrylamide polymer, polyethylene and maleic anhydride graft polymers thereof, polyisobutylene, ethylene-vinyl chloride copolymer, ethylene-vinyl alcohol copolymer, ethylene-vinyl acetate copolymer, polyethylene oxide, ethylene-acrylic acid copolymer, polypropylene and maleic anhydride graft polymers thereof, polyisobutylene and maleic anhydride graft polymers thereof, chlorinated polypropylene, 4-methylpentene-1 resin, polystyrene, ABS resin, ACS resin, AS resin, AES resin, ASA resin, MBS resin, acrylic resin, methacrylic resin, vinyl chloride resin, vinylidene chloride resin, polyamide resin, polycarbonate, vinyl alcohol resin, vinyl acetal resin, fluororesin, polyether resin, polyethylene terephthalate, nitrile rubber and a hydrogenated nitrile rubber, acrylic rubber, silicone rubber, fluororubber, butyl rubber, natural rubber, chlorinated polyethylene thermoplastic elastomer, syndiotactic 1,2-polybutadiene, simple-blend-type olefin-based thermoplastic elastomer, in-plant-type olefin-based thermoplastic elastomer, dynamically cross-linking olefin-based thermoplastic elastomer, polyvinyl chloride-based thermoplastic elastomer, polyurethane-based thermoplastic elastomer, polyester-based thermoplastic elastomer, polyamide-based thermoplastic elastomer, and fluorine-containing thermoplastic elastomer can be given. These polymer components may be used either individually or in combination of two or more.

The amount of the other polymer component is preferably from 0.1 to 100 parts by mass, more preferably from 0.1 to 80 parts by mass for 100 parts by mass of the total amount of the component (A) and component (B).

(Additives)

In addition to the above components, the olefin thermoplastic elastomer composition may contain various additives such as a filler, an aging preventive, an antioxidant, a plasticizer, an ultraviolet absorber, an antistatic agent, a weather resistant agent, a flame retardant, a filler, an antifungal agent, a blocking agent, a seal improver, a lubricant (metallic soap, wax, etc.), a stabilizer such as a heat stabilizer, a light stabilizer, and a copper inhibitor, a metal deactivator, a crystal-nuclei agent, a tackifier, a foaming agent, a foaming assistant, colorants (a dye, a pigment, etc.), and the like.

As the filler, a metal powder such as a ferrite powder, inorganic fibers such as glass fibers and metal fibers, organic fibers such as carbon fibers and alamide fibers, composite fibers, inorganic whiskers such as potassium titanate whiskers, glass beads, glass balloons, glass flakes, asbestos, mica, calcium carbonate, talc, wet silica, dry silica, alumina, alumina silica, calcium silicate, hydrotalcite, kaolin, diatom earth, graphite, pumice, ebo powder, cotton flock, cork powder, barium sulfate, a fluororesin, polymer beads, carbon black, cellulose powder, rubber powder, wood powder, and the like can be given. These fillers may be used either individually or in combination of two or more.

(Cross-linking agent)

The olefin thermoplastic elastomer composition is obtained by dynamic heat treatment of a mixture containing at least the component (A) and component (B) in the presence of a cross-linking agent. Although there are no specific limitations on the cross-linking agent used, a compound which can cross-link at least the component (A) by dynamic heat treatment at a temperature not lower than the melting point of the component (B) is preferably used.

As specific examples of the cross-linking agent, an organic peroxide, a phenol resin cross-linking agent, sulfur, a sulfur compound, p-quinone, a derivative of p-quinone dioxime, a bismaleimide compound, an epoxy compound, a silane compound, an amino resin, a polyol cross-linking agent, a polyamine, a triazine compound, metallic soap, and the like can be given. Among these, the organic peroxide and phenol resin cross-linking agent are preferable. These cross-linking agents may be used either individually or in combination of two or more. The amount of the cross-linking agent is preferably from 0.01 to 20 parts by mass, more preferably from 0.1 to 15 parts by mass, and particularly preferably from 1 to 10 parts by mass for 100 parts by mass of the total polymer components contained in the mixture.

(Organic peroxide)

As the organic peroxide, 1,3-bis(t-butylperoxyisopropyl)benzene, 2,5-dimethyl-2,5-bis(t-butylperoxy)hexyne-3,2,5-dimethyl-2,5-bis(t-butylperoxy)hexane-3,2,5-dimethyl-2,5-bis(t-butylperoxy)hexane, 2,2'-bis(t-butylperoxy)-p-isopropylbenzene, dicumyl peroxide, di-t-butyl peroxide, t-butyl peroxide, p-menthane peroxide, 1,1-bis(t-butylperoxy)-3,3,5-trimethylcyclohexane, dilauroyl peroxide, diacetyl peroxide, t-butyl peroxybenzoate, 2,4-dichlorobenzoyl peroxide, p-chlorobenzoyl peroxide, benzoyl peroxide, di(t-butylperoxy) perbenzoate, n-butyl-4,4-bis(t-butylperoxy)valerate, t-butyl peroxyisopropylcarbonate, and the like can be given.

Among these, 1,3-bis(t-butylperoxyisopropyl) benzene, 2,5-dimethyl-2,5-di(t-butylperoxy)hexyne-3,2,5-dimethyl-2,5-di(t-butylperoxy)hexane, $\alpha,\alpha$-bis(t-butylperoxy)diisopropylbenzene, dicumylperoxide, and di-t-butylperoxide are preferable. These organic peroxides may be used either individually or in combination of two or more.

When an organic peroxide is used as the cross-linking agent, the amount of the organic peroxide used is preferably from 0.05 to 10 parts by mass, and more preferably from 0.1 to 5 parts by mass for 100 parts by mass of the total amount of the polymer component contained in the mixture. If the amount of the organic peroxide is too large, the degree of cross-linking is excessive, which tends to result in impaired molding processability and mechanical strength. If the amount of the organic peroxide is too small, the degree of cross-linking is insufficient, and the rubber elasticity and mechanical strength of the resulting molded parts tend to decrease.

(Phenol resin cross-linking agent)

As examples of the phenol resin cross-linking agent, a p-substituted phenol compound shown by the following formula (2), o-substituted phenol-aldehyde condensate, m-substituted phenol-aldehyde condensate, brominated alkylphenol-aldehyde condensate, and the like can be given. Among these, p-substituted phenol compounds are preferable. These phenol resin cross-linking agents may be used either individually or in combination of two or more.

[Formula 2]

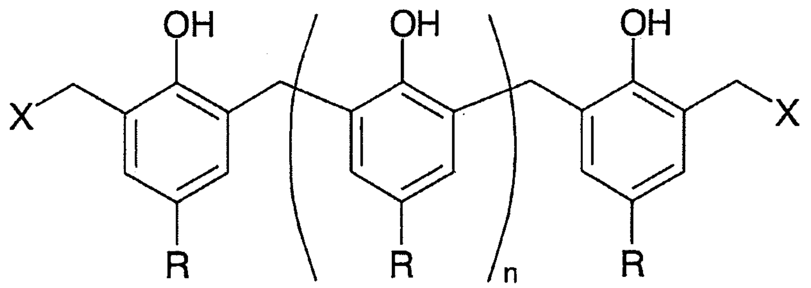

(2)

In the formulas (2), X represents a hydroxyl group, a halogenated alkyl group, or a halogen atom, R is a saturated hydrocarbon group having 1 to 15 carbon atoms, and n is an integer of 1 to 10. The p-substituted phenol compounds can be obtained by the condensation reaction of p-substituted phenol and aldehyde (preferably formaldehyde) in the presence of an alkaline catalyst.

When a phenol resin cross-linking agent is used as the cross-linking agent, the amount of the phenol resin cross-linking agent used is preferably from 0.2 to 10 parts by mass, and more preferably from 0.5 to 5 parts by mass for 100 parts by mass of the total amount of the polymer component included in the mixture. If the amount of the phenol resin cross-linking agent is too large, the degree of cross-linking is excessive, which tends to result in impaired molding processability and mechanical strength. If the amount of the phenol resin cross-linking agent is too small, the degree of cross-linking is insufficient and the rubber elasticity and mechanical strength of the resulting molded parts tend to decrease.

(Cross-linking assistant and cross-linking promoter)

Use of a cross-linking assistant and/or a cross-linking promoter together with the cross-linking agent is preferable in order to carry out a mild cross-linking reaction and to accomplish uniform cross-linking. When an organic peroxide is used as the cross-linking agent, it is preferable to use a cross-linking assistant such as sulfur, sulfur compounds (sulfur powder, colloidal sulfur, precipitated sulfur, insoluble sulfur, surface treated sulfur, dipentamethylenethiuram tetrasulfide, etc.), oxime compounds (p-quinoneoxime, p,p'-dibenzoylquinoneoxime, etc.), polyfunctional monomers (ethylene glycol di(meth)acrylate, diethylene glycol di(meth)acrylate, triethylene glycol di(meth)acrylate, tetraethylene glycol di(meth) acrylate, polyethylene glycol di(meth)acrylate, trimethylolpropane tri(meth)acrylate, diallyl phthalate, tetraallyloxyethane, triallylcyanurate, N,N'-m-phenylene bismaleimide, N,N'-toluylene bismaleimide, maleic anhydride, divinylbenzene, zinc

di(meth)acrylate, etc.). Among these, p,p'-dibenzoylquinoneoxime, N,N'-m-phenylene bismaleimide and divinylbenzene are preferable. These cross-linking assistants may be used either individually or in combination of two or more. N,N'-m-phenylene bismaleimide may be used as a cross-linking agent alone because this compound has a function of a cross-linking agent.

When an organic peroxide is used as the cross-linking agent, the amount of the cross-linking assistant used is preferably 10 parts by mass or less, and more preferably from 0.2 to 5 parts by mass for 100 parts by mass of the total amount of the polymer component included in the mixture. If the amount of the cross-linking assistant is more than 10 parts by mass, the degree of cross-linking becomes excessive, molding processability is reduced, and the mechanical properties of the molded parts tend to be poor.

When a phenol resin cross-linking agent is used, use of a metallic halide (stannous chloride, ferric chloride, etc.), an organic halide (chlorinated polypropylene, brominated butyl rubber, chloroprene rubber, etc.), and the like as a cross-linking promoter is preferable in order to control the cross-linking speed. In addition to the cross-linking promoter, use of a dispersant such as metal oxide (e.g. zinc oxide) or stearic acid is more desirable.

(Preparation of olefin thermoplastic elastomer composition)

The olefin thermoplastic elastomer composition is obtained by dynamic heat treatment of a mixture containing at least the component (A) and component (B) in the presence of a cross-linking agent. The component (A) and component (B) may be used as it is or may be used as compositions containing the same additive or different additives. The component (A) may be in any form such as bales, crumbs, pellets, fine particles (including a ground product of bales or crumbs). Two or more types of components (A) each having a shape different from the other(s) may be used in combination.

The term "dynamic heat treatment" herein refers to the treatment of both applying shearing force and applying heat. As a specific unit for carrying out the kneading, a melt kneader can be given. The melt kneader may be either a batch-type or a continuous-type. As specific examples of the melt kneader, an open-type mixing roller, a closed-type Banbury mixer, a monoaxial extruder, a biaxial extruder, a continuous kneader, a pressure kneader, and the like can be given. Among these, continuous melt kneaders such as a monoaxial extruder, a biaxial extruder, and a continuous kneader are preferable from the viewpoint of economy, efficiency of treatment, and the like. Two or more of the same type or different types of continuous-type melt kneaders can be used in combination.

The L/D ratio of a biaxial extruder, the ratio of the effective screw length (L) to the outer diameter (D), is preferably 30 or more, and more preferably 36 to 60. As the biaxial extruder, although any biaxial extruder in which the two screws are gearing or not gearing can be used, a biaxial extruder in which the two screws rotate in the same direction while gearing is preferred. As such biaxial extruders, "PCM" manufactured by Ikegai, Ltd., "KTX" manufactured by Kobe Steel, Ltd., "TEX" manufactured by The Japan Steel Works, Ltd., "TEM" manufactured by Toshiba Machine Co., Ltd., "ZSK" manufactured by Werner & Pfleiderer Corp., and the like can be given.

The L/D ratio of a continuous kneader, the ratio of the effective screw length (L) to the outer diameter (D), is preferably 5 or more, and more preferably 10 to 60. As examples of commercially available continuous kneaders, "MIXTRON KTX-LCM-NCM" manufactured by Kobe Steel, Ltd. and "CIM-CMP" manufactured by The Japan Steel Works, Ltd., can be given.

The temperature of the dynamic heat treatment is usually from 120 to 350°C, and preferably from 150 to 290°C. The treating time is usually from 20 seconds to 320 minutes, and preferably from 30 seconds to 25 minutes. The shearing force applied to the mixture is usually from 10 to 20,000/sec, and preferably from 100 to 10,000/sec, in terms of the shear rate.

Fluidity (190°C, 49N) of the thermoplastic elastomer measured according to JIS-K7210 is preferably 0.1 g/10 min or more, more preferably 0.5 g/10 min or more, and particularly preferably 1 g/10 min or more. The fluidity of the thermoplastic elastomer in the above range makes a product with excellent extrusion foam-molding processability. The upper limit of the fluidity of the thermoplastic elastomer may be, but not limited to, 1000 g/10 min or less.

(First molded part)

A first molded part 11 of the molded composite (weather strip 1) of the embodiment is a part formed by extrusion foam-molding of the olefin thermoplastic elastomer composition (see FIG 1). The first molded part 11 may be a hollow foamed object. If the thermoplastic elastomer composition (non-foamed body) and/or metal is extrusion-molded simultaneously with extrusion foam-molding, a weather strip for use in the inside of a vehicle constituted of a solid portion (thermoplastic elastomer composition), a sponge portion (thermoplastic elastomer composition), and a core (metal) can be produced.

The Asker C hardness measured according to JIS K6253 of the first molded part 11 is preferably 80 or less, more preferably 75 or less, and particularly preferably 70 or less. If the Asker C hardness of the first mold part 11 is in

the above-mentioned range, a weather strip 1 with excellent flexibility can be obtained. The lower limit of the Asker C hardness may be, but not limited to, 10 or more.

When the first molded part 11 has a hollow shape, the compression set is preferably 50% or less, more preferably 45% or less, and particularly preferably 40% or less after being compressed to 50% for 22 hours at 70°C. If the compression set of the first molded part I1 is in the above range, the molded composite exhibits excellent sealing properties. The lower limit of the compression set may be, but not limited to, 1% or more.

The expansion ratio of the first molded part 11 is 1.2 times or more, preferably 1.3 or more, and more preferably 1.5 or more. A light molded composite can be obtained if the expansion ratio of the first molded part 11 is in the above range. The upper limit of the expansion ratio of the first molded part 11 may be, but not limited to, 30 times or less.

The first molded part 11 may have the shape of a line, a plate, a cylinder (hollow), or the like without a particular limitation. An infinite form obtained by a combination of these shapes or a shape obtained by deforming these shapes may also be used. In addition, a form which has a through-hole, a recess, a projection, or the like may be used. Since the molded composite of the embodiment is made from specific materials, the shape of the first molded part 11 has excellent strength even if the first molded part 11 has a deformed shape of a curved shape or the like. There are also no particular limitations on the size of the first molded part. Therefore, the length, thickness, intervals, and the like of each part of the first molded part may also suitably be determined according to the purpose, application, and the like. The first molded part 11 can also be prepared by cutting an extrusion molded article having a predetermined cross-sectional configuration.

The first molded part preferably includes a reinforcing member on the outer surface and/or on the inside. There are no specific limitations on the material, shape, and the like of the reinforcing member insofar as the reinforcing member can stabilize the structure of the first molded part. Any organic or inorganic material which does not substantially react with the olefin thermoplastic elastomer composition that forms the first molded part or which does not substantially react with water (by decomposition, corrosion, etc.) can be used as the material constituting the molded composite. A combination of an organic material and an inorganic material may also be used. A polymer is a preferable organic material. A metal, alloy, ceramic, and the like are preferable as the inorganic material.

The reinforcing component may have the shape of a lump, a line, a plate, or the like. An infinite form obtained by a combination of these shapes or a shape obtained by deforming these shapes may also be used. In addition, a form having a through-hole, a recess, a projection, or the like may be used in order to ensure integrity with the first molded part.

In addition, in order to make the first added part an extrusion-formed body, a foaming agent is added to the raw material composition (olefin thermoplastic elastomer composition) for forming the first molded part. As examples of the foaming agent, a thermally decomposable foaming agent, a volatile foaming agent, a hollow particle foaming agent, a supercritical fluid, and the like can be given. These foaming agents may be used either individually or in combination of two or more. A suitable foaming agent is selected according to the type of polymers contained in the olefin thermoplastic elastomer composition, the process of forming the first molded part, and the like.

As examples of the thermally decomposable foaming agents, a nitroso foaming agent such as N,N'-dinitrosopentamethylenetetramine and N,N'-dimethyl-N,N'-dinitrosoterephthal amide; an azo foaming agent of barium azodicarboxylate such as azodicarbonamide and barium azodicarboxylate; a sulfohydrazide foaming agent such as p,p-oxybisbenzenesulfonylhydrazide, 4,4'-oxybis(benzenesulfonylhydrazide), and p-toluenesulfonilylsemicarbazide; a triazine foaming agent such as trihydrazinotriazine; an inorganic foaming agent of a tetrazole foaming agent such as 5-phenyltetrazole, azobistetrasoldiguanidine, and azobistetrazoleaminoguanidine; and an inorganic foaming agent such as sodium hydrogencarbonate can be given. These thermally decomposable foaming agents may be used either individually or in combination of two or more.

The amount of the thermally decomposable foaming agents used is appropriately determined according to the type, the desired expansion rate, and the like. Specifically, the amount is preferably selected from a range of 0.1 to 100 parts by mass for 100 parts by mass of the polymer component included in the olefin thermoplastic elastomer composition used to form the second molded part.

As examples of the volatile foaming agent, aliphatic hydrocarbons such as propane, butane, and pentane; alicyclic hydrocarbons such as cyclobutane, cyclopentane, and cyclohexane; halogenated hydrocarbons such as chlorodifluoromethane, difluoromethane, trifluoromethane, trichlorofluoromethane, dichloromethane, dichlorofluoromethane, dichlorodifluoromethane, trichlorofluoromethane, chloromethane, chloroethane, dichlorotrifluoroethane, dichlorofluoroethane, chlorodifluoroethane, dichloropentafluoroethane, pentafluoroethane, trifluoroethane, dichlorotetrafluoroethane, trichlorotrifluoroethane, tetrachlorodifluoroethane, chloropentafluoroethane, and perfluorocyclobutane; inorganic gases such as carbon dioxide, nitrogen, air; water; and the like can be given. These volatile foaming agents may be used either individually or in combination of two or more.

The amount of the volatile foaming agents used is appropriately determined according to the type, the desired expansion rate, and the like. Specifically, the amount is preferably selected from a range of 0.1 to 100 parts by mass for 100 parts by mass of the polymer component included in the olefin thermoplastic elastomer composition used to form the first molded part.

The term "hollow particle foaming agent" refers to a thermal expandable microsphere having an outer shell of a thermoplastic resin containing an expansion agent therein. As the thermoplastic resin that forms the outer shell, a homopolymer or a copolymer of (meth)acrylonitrile, (meth)acrylate, vinyl halide, vinylidene halide, an aromatic vinyl compound such as styrene, vinyl acetate, butadiene, chloroprene, vinylpyridine, and the like can be given. Such a thermoplastic resin may be divinylbenzene, ethylene glycol (meth)acrylate, triethylene glycol di(meth)acrylate, trimethylolpropane tri(meth)acrylate, 1,3-butylene glycol di(meth)acrylate, allyl(meth)acrylate, triacrylformal, triallylisocyanulate, and the like which are cross-linked or made cross-linkable by the cross-linking agent.

As the expansion agent contained in the microsphere, the compounds given as examples of the volatile foaming agent can be used. The amount of the expansion agent in the thermally expandable microspheres is preferably 5 to 30 mass% for 100 mass% of the thermoplastic resin of the outer shell.

The weight average particle diameter of a hollow particle foaming agent (in the state of unexpanded microspheres) is preferably 1 to 100 μm. The amount of the hollow particle foaming agents used is appropriately determined according to the type, the desired expansion rate, and the like. Specifically, the amount is preferably selected from a range of 0.1 to 100 parts by mass for 100 parts by mass of the polymer component included in the olefin thermoplastic elastomer composition used to form the first molded part.

As the supercritical fluid, a supercritical fluid such as nitrogen, carbon dioxide, and the like can be used. These supercritical fluids may be used either individually or in combination of two or more. The amount of the supercritical fluid used is appropriately determined according to the type, the desired expansion rate, and the like.

When a foaming agent is used, a foam nucleating agent such as sodium bicarbonate, citric acid, talc, and the like may be optionally used in order to adjust the foam diameter. The amount of the foam nucleating agent is preferably from 0.1 to 100 parts by mass for 100 parts by mass of the polymer component included in the olefin thermoplastic elastomer composition used to form the first molded part.

(Second molded part)

A second molded part 12 of the molded composite (weather strip 1) of the embodiment is a part formed by injection molding of the olefin thermoplastic elastomer composition that has been described above and a commonly-used olefin thermoplastic elastomer composition other than the above-described olefin thermoplastic elastomer composition (see FIG 1). The second molded part 12 may be a solid product, a hollow product, or a foamed product. When the second molded part 12 is a foamed product, there are no specific limitations on the type and the amount of the foaming agent, the expansion rate, the forming method, and the like used for producing the foamed product.

Inclusion of the above-mentioned component (B-b) (α-olefin amorphous thermoplastic resin) in the thermoplastic elastomer composition used for forming the second molded part is desirable to improve injection fusibility with the first molded part and particularly folding peelability. The amount of the component (B-b) in the thermoplastic elastomer composition used for forming the second molded part is preferably 0.5 mass% or more, more preferably 1 mass% or more, and particularly preferably 3 mass% or more. The content of the component (B-b) may be, but not limited to, 15 mass% or less.

When the second molded part is a non-foamed product, its hardness determined by a Dureau A hardness meter (conforming to JIS K6263) is preferably 50 or less, more preferably 45 or less, and particularly preferably 40 or less. The hardness (Dureau A) of the second molded part may be, but not limited to, 5 or more. When the second molded part is a foamed product, its hardness determined by an Asker C hardness meter (conforming to JIS K6263) is preferably 80 or less, more preferably 75 or less, and particularly preferably 70 or less. The hardness (Asker C) of the second molded part may be, but not limited to, 10 or more.

When the second molded part has a hollow shape, the compression set is preferably 50% or less, more preferably 45% or less, and particularly preferably 40% or less, after compressed 50% for 22 hours at 70°C. If the compression set of the second molded part is in the above range, the molded composite exhibits excellent sealability. The compression set may be, but not limited to, 1% or more.

Fluidity (190°C, 49N) of the thermoplastic elastomer used for forming the second molded part measured according to JIS K7210 is preferably 0.1 g/10 min or more, more preferably 0.5 g/10 min or more, and particularly preferably 1 g/10 min or more. The fluidity of the thermoplastic elastomer in the above range makes a product with excellent injection moldability. The fluidity of the thermoplastic elastomer may be, but not limited to, 1000 g/10 min or less.

As examples of the commonly-used thermoplastic elastomer composition used for producing the second molded part, "Milastomer" (manufactured by Mitsui Chemicals, Inc.); "Thermolane" and "Lavalone" (manufactured by Mitsubishi Chemical Corp.); "Sumitomo TPE" and "Sumitomo TPE-SB" (manufactured by Sumitomo Chemical Co., Ltd.); "Santoprene" (Advanced Elastomer Systems Inc.); "Sarlink" (manufactured by DSM); "Oleflex", "Rheostomer" and "Multi-used Rheostomer" (manufactured by Riken Technos Corp.); and the like can be given.

There are no specific limitations to the shape of the second molded part 12. The length, thickness, intervals, and the like of each part may be suitably determined as in the case of the first molded part 11.

(Molded composite)

The molded composite (weather strip 1) of the embodiment has a first molded part 11 and a second molded part 12 which is bonded to the surface and/or the section of the first molded part 11 (see FIG 1). The first molded part 11 and the second molded part 12 are bonded in an area (a bonding area) which has the form of a plane, a curved surface, a concavo-convex surface, etc. The bonded area may be entirely bonded or partly bonded. When either the first molded part 11 or the second molded part 12 is a foamed material, the two parts are joined together by causing the material constituting the other part which is not the foamed body to enter into the voids of the foamed body. For example, when the first molded part 11 is a foamed body, the first molded part 11 is bonded to the second molded part 12 by causing the olefin thermoplastic elastomer composition, from which the second molded part 12 is formed, to enter into the voids of the bonding area of the first molded part 11.

A polyolefin resin (B) is included in the materials which form the first molded part 11 and the second molded part 12. Therefore, the weather strip 1 of the embodiment is extremely excellent in the adhesiveness between the molded parts and can effectively prevent exfoliation of the bonded parts. In addition, in the weather strip 1 of the embodiment, both the first molded part 11 and the second molded part 12, which constitute the weather strip 1, are made from thermoplastic elastomer compositions having high recycling efficiency. Therefore, the weather strip 1 of the embodiment is extremely excellent in recycling efficiency.

When both the first molded part 11 and the second molded part 12 have a hollow shape, the compression set of the molded composite is preferably 50% or less, more preferably 45% or less, and particularly preferably 40% or less, after compressed 50% for 22 hours at 70°C. If the compression set of each part is in the above range, the molded composite exhibits excellent sealability. The compression set may be, but not limited to, 1% or more.

The molded composite of the embodiment may have any one of the following structures [1] to [4], wherein (P) indicates the first molded part and (Q) indicates the second molded part. The structures may be suitably selected according to the purpose, application, and the like, while taking full advantage of excellent adhesiveness.

[Expression 2]

[1] 〔(P) − (Q)〕m

[2] (P) − 〔(Q) − (P)〕m

[3] (Q) − 〔(P) − (Q)〕m

[4] 〔(P) − (Q)〕n

In the structures [1] to [4], m is an integer of 1 or more, and n is an integer of 2 or more.

In any of the above structures [1] to [4], the first molded part (P) and the second molded part (Q) are alternately bonded. FIG 1 shows an example of the molded composite of the structure [1] in which m = 1. That is, FIG 1 shows a weather strip 1 in which the first molded part 11 in the form of a straight line bonds to the second molded part 12 in the form of a straight line.

FIG 2 shows an example of the molded composite of the structure [2] in which m = 1. That is, FIG 2 shows a weather strip 1 in which a first molded part 11 in the form of a curved line is disposed between two second molded parts 12 in the form of straight lines and bonded to these two second molded parts 12.

The above [4] indicates a structure in which the first molded part and the second molded part are alternately bonded and the main chain has a ring structure (such as a circular shape, a square shape, a sector shape, a star shape, etc.). Therefore, the molded composite shown by the structure [4] has a ring structure in which the end of the first molded part and the end of the second molded part are bonded.

The structure of the molded composite of the embodiment is not limited to the structures shown by the above [1] to [4]. The molded composite of the embodiment may have a structure in which two or more structures shown by [1] to [4] above are combined or a structure having two molded parts in which two or more molded parts are bonded to the surface of the other molded part.

2. Process for producing molded composite

Next, one embodiment of the process for producing a molded composite of the present invention is described. The process for producing the molded composite of the embodiment includes a step of obtaining a molded member having an expansion ratio of 1.2 times or more by extrusion foam molding of an olefin thermoplastic elastomer composition containing the component (A), the component (B), and the component (C) and obtained by dynamically heat-treating a mixture of at least the component (A) and the component (B) in the presence of a cross-linking agent (hereinafter referred to as "step (I)"), a step of placing the resultant molded member in a die cavity so that the surface and/or the cross-sectional surface thereof are exposed (hereinafter referred to as "step (II)"), and a step of introducing the olefin thermoplastic elastomer composition and/or another thermoplastic elastomer composition into the die cavity by injection (hereinafter referred to as "step (III)").

First, in the step (I), a molded member with a desired shape (a first molded part) is obtained by extrusion molding of an olefin thermoplastic elastomer composition using a screw-type or a non-screw-type extruder. The extrusion molding is usually carried out using a melted olefin thermoplastic elastomer composition. In order to produce the foamed molded member, the olefin thermoplastic elastomer composition may be foamed in the extruder and extruded in the foamed state, may be foamed immediately after extrusion, or may be extruded in an non-foamed state and foamed by heating again after extrusion.

Next, in the step (II), the molded member is placed in a die cavity so that at least a part of the surface and/or the section thereof is exposed from the die cavity. For example, the molded member is placed in a die cavity so that the end thereof (part to be bonded) is exposed to the die cavity. That is, the molded member is placed in a die cavity so that the surface to be contacted with the olefin thermoplastic elastomer composition or the commonly-used thermoplastic elastomer composition to be used in the step (III) is exposed to the inside (cavity) of the die.

After that, in the step (III), the olefin thermoplastic elastomer composition and the commonly-used thermoplastic elastomer composition are introduced into the die cavity using an injection molding machine or the like. The olefin thermoplastic elastomer composition is caused to flow toward the part to be bonded of the molded member to form the first molded part.

The melt flow rate (MRF) measured according to JIS K7210 at a temperature of 230°C and under a load of 21 N of the olefin thermoplastic elastomer composition forming each molded member (first molded part and second molded part) is preferably 0.1 g/10 min or more, more preferably 1.0 g/10 min or more, particularly preferably 2.0 g/10 min or more, and most preferably 3.0 g/10 min or more. If the MFR of the olefin thermoplastic elastomer composition is less than 0.1 g/10 min, processability tends to be insufficient. On the other hand, if the MFR is too large, the mechanical strength of the resulting molded members tends to decrease. Therefore, the MFR of the olefin thermoplastic elastomer composition is preferably not more than 100 g/10 min.

Since the olefin thermoplastic elastomer composition for producing the molded composite of the embodiment contains a specific polymer, the composition exhibits excellent fluidity. For this reason, the die is polluted only with difficulty after forming the each molded member, and the die can be used for a long period of time. The olefin thermoplastic elastomer composition can be reused. Therefore, it is possible to reuse unaccepted molded products and to efficiently utilize the raw materials without a loss.

There are no specific limitations to the method and the apparatus for introducing the raw material, the olefin thermoplastic elastomer composition, to the die cavity in the step (III). Injection equipment such as a screw type and a plunger type can be used as the apparatus. The feed rate, in terms of the injection rate, is preferably 1 to 2000 $cm^3$/sec, and more preferably 10 to 1000 $cm^3$/sec.

The temperature at which the olefin thermoplastic elastomer composition is introduced into the die cavity is preferably from 150 to 300°C. In this instance, the die may be either heated or not heated. A preferable die temperature is 30 to 80°C. The internal wall of the die cavity may have a flat and smooth surface or may be designed to produce characters, patterns, or the like according to the purpose of use, application, and the like of the target molded composite. When a die cavity with an internal wall surface having high flatness and smoothness is used, the fluidity of the olefin thermoplastic elastomer composition is increased, and the die transfer performance can be improved. In such a case, a molded composite having a molded member with high gloss can be obtained.

When the olefin thermoplastic elastomer composition is introduced into the die cavity, the molded member which is placed in the cavity in the step (II) may previously be heated or may be kept at around room temperature (25°C). It is more preferable, however, to previously heat the molded part to a temperature of 30 to 80°C.

After introducing the olefin thermoplastic elastomer composition to the die cavity in the step (III), the molded members are bonded by cooling for a period of preferably 1 to 120 seconds, and more preferably 5 to 60 seconds. Then, the integrated molded composite (weather strip) can be removed from the die. According to the process for producing the molded composite of the embodiment, operations such as placing the molded members in the die cavity, introducing the olefin thermoplastic elastomer composition into the die cavity, and cooling the introduced olefin thermoplastic elastomer composition can be carried out in a short period of time. That is, one molded composite can be produced in a

very short time, preferably of 7 to 180 seconds, and more preferably 10 to 120 seconds. In addition, since the dies can be used under low temperature conditions, the process is unscaldable and safe.

A molded composite with a configuration shown in FIG 2, for example, can easily be produced according to the process for producing a molded composite of the embodiment. That is, an integrated molded composite (weather strip 1) can be produced by previously forming two molded members (second molded parts 12), placing these two second molded parts 12 in a die having a vacancy (cavity) so that the end of each molded part is exposed to the cavity, and introducing the olefin thermoplastic elastomer composition into the cavity. The molded composites shown by the above structures [1] to [4] can be produced in the same manner.

Although the molded composite of the embodiment is ideal as a weather strip for vehicles such as an automotive interior material and automotive exterior material, the molded composite exhibits excellent characteristics when used as other components, for example, as a sealing material, a gasket, a packing, and the like. As the weather strip, a door weather strip, a trunk weather strip, a luggage weather strip, a roof side rail weather strip, a slide door weather strip, a ventilator weather strip, a slide loop panel weather strip, a front window weather strip, a rear window weather strip, a quarter window weather strip, a lock pillar weather strip, a door glass outer weather strip, a door glass inner weather strip, and the like can be given. As the sealing material, sealants for building materials, household appliances, industrial machines, and the like can be given.

When using the weather strip for the door of a car, a weather strip shown in FIG 3, for example, can be used. That is, the weather strip 2 has an annular structure in which first molded parts 11a to 11e are alternately bonded to second molded parts 12a to 12e, and is secured to the predetermined position of the rim of the door 3.

Examples

The present invention is described below in more detail by way of examples. Note that the present invention is not limited to the following examples.

Example 1

The present invention is specifically described below by way of examples. Note that the present invention is not limited to the following examples. In the examples, "part(s)" means "part(s) by mass" and "%" means "mass%" unless otherwise indicated. Methods for measuring and evaluating various properties are as follows.

[Melt flow rate (MFR)]: measured according to JIS K7210 at 190°C under a load of 49 N to be used as an index of fluidity.

[Hardness (Shore A)]: measured according to JIS K6253 and used as an index of flexibility.

[Tensile strength at break and tensile elongation at break]: measured in accordance with JIS K6251.

[Compression set]: measured in accordance with JIS K6262 using an extrusion foam-molded member (hollow molded product) compressed 50% at 70°C for 22 hours, to be used as an index of rubber elasticity. An injection molded part (hollow molded product) was also measured under the conditions of compression rate of 50% at 70°C for 22 hours.

[Dynamic friction coefficient]: A test specimen with a length of 110 mm, a width of 61 mm, and a thickness of 2 mm was prepared using the material (olefin thermoplastic elastomer composition) to be measured by injection molding. The dynamic friction coefficient was measured using the test specimen by sliding a cylindrical glass ring with an outer diameter of 25.7 mm, an inner diameter of 20 mm, a height of 16.5 mm, and a weight of 9.6 g by a reciprocating slide tester (manufactured by Tosoku Seimitsu K.K.). Incidentally, the sliding conditions were a load of 233 g/3 $cm^2$ (plane pressure: 78 g/$cm^2$) and a slide velocity of the glass ring of 100 mm/min (one stroke = 50 mm). The dynamic friction coefficient measured at room temperature one day after injection molding was regarded as "dynamic friction coefficient (initial)" to be used as an index of the initial sliding properties. In addition, the dynamic friction coefficient measured when the glass ring was reciprocated 10,000 times was regarded as "dynamic friction coefficient (after reciprocating 10,000 times)" to be used as an index of the sliding durability.

[Bleeding test]: A square test specimen with a length of 40 mm, a width of 3 0 mm, and a thickness of 2 mm was prepared from a sheet which was obtained by injection molding of the material (olefin thermoplastic elastomer composition) to be measured. The test specimen was allowed to stand in a thermostatic oven at 80°C for 168 hours to inspect bleed out of a liquid and/or solid material by naked eye observation of external appearance and the touch sensation of the molded surface.

Good: No bleed out occurred
Bad: Bleed out occurred

[Injection fusion properties]: The molded composite (test specimen) was punched with a dumbbell cutter No. 2 so that the joint part (fusion area) was positioned in the center, and pulled at 40 mm of a chuck distance at a pulling

rate of 200 mm/min to measure the bonding strength (MPa) of the joint part (fusion area).

[Folding peelability]: The molded composite (test specimen) was folded at an angle of 180° at the joint part (fusion area) repeatedly 10 times to observe the peeling conditions at the joint part by naked eye observation.

Good: No peeling occurred
Bad: Peeling occurred or the test specimen was broken

[Expansion rate]: The expansion rate was calculated from the specific gravity of the thermoplastic elastomer composition before and after foaming.

(Raw materials)

Raw materials described in (1) to (12) below were used.

(1) Ethylene-α-olefin copolymer rubber (oil-extended rubber)

Ethylene/propylene/5-ethylidene-2-norbornene ternary copolymer (ethylene content: 66 mol%, 5-ethylidene-2-norbornene content: 4.5 mol%, limiting viscosity: 4.7 dl/g, content of paraffin-based softening agent ("Diana Process Oil PW90" manufactured by Idemitsu Kosan): 50%)

(2) α-Olefin-containing crystalline thermoplastic resin

Polypropylene (propylene/ethylene random copolymer, "Novatech FL25R" manufactured by Japan Polychem Corp. (density: 0.90 g/$cm^3$, MFR = 23 g/10 min (temperature: 230°C, load: 2.16 kg))

(3) α-Olefin-containing amorphous thermoplastic resin

Propylene/1-butene amorphous copolymer ("UBETAC APAO UT 2880" manufactured by Ube Rexene Co., Ltd., propylene content: 71 mol%, melting viscosity: 8,000 cps, density: 0.87 g/$cm^3$, Mn: 6500)

(4) Mineral oil-based softening agent

Paraffin softening agent: "Diana Process Oil PW90" manufactured by Idemitsu Kosan Co., Ltd

(5) Unmodified organopolysiloxane (1)

Undenaturalized polydimethylsiloxane ("Silicone oil SH-200" manufactured by Toray-Dow Coming Silicone Co., Ltd., viscosity: 100 cSt)

(6) Unmodified organopolysiloxane (2)

Undenaturalized polydimethylsiloxane ("Silicone oil SH-200" manufactured by Toray-Dow Coming Silicone Co., Ltd., viscosity: 1000 cSt)

(7) Vinyl group-containing organopolysiloxane

A mixture ("TSE221-5U" manufactured by GE Toshiba Silicone) of 100 parts of methylvinylpolysiloxane with a polymerization degree of about 7000 consisting of 99.85 mol% of a dimethylsiloxane unit and 0.15 mol% of a methylvinylsiloxane unit with molecular terminals sealed with dimethylvinylsiloxane, and 40 parts of fumed dry silica ("AEROSIL 200" manufactured by Japan Aerosil Co.)

(8) Other additives

(i) Higher fatty acid amide: oleic amide manufactured by Kao Corp.
(ii) Cross-linking agent: 5-dimethyl-2,5-di(t-butylperoxy)hexane, "Perhexa 25B-40" manufactured by NOF Corp.
(iii) Cross-linking assistant: Divinylbenzene manufactured by Sankyo Chemicals Co., Ltd., purity: 55%

(iv) Aging preventive: "Irganox 1010" manufactured by Ciba Specialty Chemicals
(vi) Black pigment: A mixture of carbon black and crystalline polypropylene ("PP-M77255" manufactured by Dainichiseika Color & Chemicals Mfg. Co., Ltd., carbon-black content: 30%)

Example 1

A pressurized kneader (volume: 101, manufactured by Moriyama Co., Ltd.) previously heated to 150°C was charged with 76 parts of an oil extended rubber, 6 parts of an α-olefin crystalline thermoplastic resin, 6 parts of an α-olefin amorphous thermoplastic resin, 12 parts of a mineral oil-based softener, 0.1 part of an aging preventive, 3 parts of unmodified organopolysiloxane (1), 3 parts of unmodified organopolysiloxane (2), 3 parts of a vinyl group-containing organopolysiloxane, 0.2 parts of higher fatty acid amide, and 1 part of a black pigment. The mixture was kneaded at 40 rpm (a shear rate of 200/sec) for 15 minutes until the α-olefin crystalline thermoplastic resin and α-olefin amorphous thermoplastic resin were melted and each component was homogeneously dispersed. The resulting molten kneaded material was palletized using a feeder ruder (manufactured by Moriyama Co., Ltd.) to obtain pellets. One part of a cross-linking agent and 1.25 parts of cross-linking assistant (1) were added to the pellets, and the mixture was mixed for 30 seconds using a Henschel mixer. The mixture was extruded from a biaxial extruder (a unidirectional complete gear-type screw, the ratio of the screw flight length (L) to the screw diameter (D), L/D = 33.5, "PCM45 type" manufactured by Ikegai, Ltd.) while dynamically treating with heat at 200°C for one minute and 30 seconds at a rotation of 300 rpm and a shear rate of 400/s to obtain pellets of the olefin thermoplastic elastomer composition (TPV (1)). The results of measurement of various properties of the olefin thermoplastic elastomer composition (TPV (1)) are shown in Table I.
2.0 parts of a thermally decomposable foaming agent ("Polythrene EE206" manufactured by Eiwa Chemical Ind. Co., Ltd.) was added to the olefin thermoplastic elastomer composition (TPV (1)) and mixed by stirring to obtain a master batch. The resulting master batch was put into a monoaxial extruder with a diameter of 40 mm ("FS-40" manufactured by Ikegai Corp., L/D ratio = 28, foaming temperature: 210°C, screw rotation: 30 rpm, full flight screw) and foamed by extrusion foaming to obtain an extrusion foam-molded number with a hollow structure (inner diameter: 16 mm, wall thickness: 2 mm) at an expansion rate of 1.3.
The resulting extrusion foam-molded part was placed in a die cavity. The olefin thermoplastic elastomer composition (TPV (1)) was molded by injection-molding using an injection molding machine ("N-100" manufactured by The Japan Steel Works, Ltd.) under the conditions of a die temperature of 50°C, a second molded part introduction time of 10 seconds, injection time of one second, cooling time of 30 seconds, and sample-removing time of 10 seconds, to obtain a molded composite of Example 1 with a wall thickness of 2 mm and an inner diameter of 16 mm. The molded composite was punched with a dumbbell cutter No. 2 so that the joint part was positioned in the center to measure the injection fusion (bonding strength). The results of the bonding strength measurement are shown in Table 2. The results of measurement of various properties of the extrusion foam-molded member are shown in Table 2. In addition, the injection molded member alone was cut from the molded composite to measure the compression set. The results of the compression set measurement are shown in Table 2.
The molded composite obtained in Example 1 was recycled by pulverizing using a grinder and pelletizing the pulverized material using a monoaxial extruder with a diameter of 40 mm ("FS-40" manufactured by Ikegai Corp., L/D ratio = 28, foaming temperature: 210°C, screw rotation: 30 rpm, full flight screw). The recycling efficiency was evaluated according to the following standard. The evaluation results are shown in Table 2.

Good: Recyclable
Bad: Unrecyclable

Examples 2 to 4

Pellets of olefin thermoplastic elastomer compositions (TPV (2) to (4)) were obtained in the same manner as in Example 1 except for using the composition shown in Table 1. The results of measurement of various properties of the olefin thermoplastic elastomer compositions (TPV (2) to (4)) are shown in Table 1. Extrusion foam-molded members with a hollow shape were obtained in the same manner as in Example 1 using the olefin thermoplastic elastomer compositions (TPV (2) to (4)).
Molded composites (Examples 2 to 4) were prepared in the same manner as in Example 1 using the resulting extrusion foam-molded parts. The results of measurement of various properties and evaluation of the molded composites (Examples 2 to 4) are shown in Table 2.

Comparative Example 1

A mixture was obtained by mixing 90 parts of carbon black ("ASAHI 50HG" manufactured by Asahi Carbon

Co., Ltd.), 50 parts of paraffin-based process oil ("PW380" manufactured by Idemitsu Kosan), 50 parts of Mistron Vapor, 7 parts of active zinc oxide (manufactured by Sakai Chemical Industry Co., Ltd.), 1 part of stearic acid (manufactured by Asahi Denka Kogyo KK), 1 part of processing aid ("Hitanol 1501" manufactured by Hitachi Chemical Co., Ltd.), 2 parts of release agent ("Struktol WB212" manufactured by Schill & Seilacher), and 1 part of plasticizer (polyethylene glycol) to 100 parts of ethylene/propylene/5-ethylidene-2-norbornene ternary copolymer ("EP65" manufactured by JSR Corporation, propylene content: 40 mol%, Mooney viscosity ($ML_{1+4}$, 100°C): 74, iodine value: 29).

The mixture was kneaded at 50°C and 70 rpm for 2.5 minutes using a Banbury mixer. 10 parts of dehydrating agent ("Besta PP" manufactured by Inoue Sekkai Kogyo), vulcanization accelerators (1.0 part of "MZ", 2.5 parts of "PZ", 0.5 parts of "TL", and 0.5 parts of "DM" all manufactured by Ouchi Shinko Chemical Industrial Co., Ltd.), and 1.5 parts of sulfur were added to the mixture. The mixture was mixed at 50°C using an open roll to obtain a rubber composition for producing a sponge. A vulcanized rubber sponge with an inner diameter of 16 mm (research underway), a thickness of 2 mm, and an expansion rate of 2.0 times was produced by hot air vulcanization (HAV) at 230°C for six minutes.

The vulcanized rubber sponge was placed in a die cavity. The olefin thermoplastic elastomer composition (TPV (1)) was molded by injection-molding using an injection molding machine ("N-100" manufactured by The Japan Steel Works, Ltd.) under the conditions of a die temperature of 50°C, a second molded part introduction time of 10 seconds, injection time of one second, cooling time of 30 seconds, and sample-removing time of 10 seconds, to obtain a molded composite of Comparative Example 1 with a wall thickness of 2 mm and an inner diameter of 16 mm. The results of measurement of various properties and evaluation of the molded composite of Comparative Example 1 are shown in Table 2.

Comparative Examples 2 and 3

Pellets of an olefin thermoplastic elastomer composition (TPV (5)) were obtained in the same manner as in Example 1 except for using the composition shown in Table 1. The results of measurement of various properties of the olefin thermoplastic elastomer composition (TPV (5)) are shown in Table 1. An extrusion foam-molded member with a hollow shape was obtained in the same manner as in Example 1 using the olefin thermoplastic elastomer composition (TPV (5)).

Molded composites (Comparative Examples 2 and 3) were prepared in the same manner as in Example 1 using the resulting extrusion foam-molded members. The results of measurement of various properties and evaluation of the molded composites (Comparative Examples 2 and 3) are shown in Table 2.

TABLE 1

| | | | TPV (1) | TPV (2) | TPV (3) | TPV (4) | TPV (5) |
|---|---|---|---|---|---|---|---|
| | Component (A) | Ethylene-α-olefin copolymer rubber | 38 | 24 | 30 | 37.5 | 39 |
| | Component (B) | α-Olefin-containing crystalline thermoplastic resin | 6 | 5 | 5 | 5 | 17 |
| | | α-Olefin-containing amorphous thermoplastic resin | 6 | 5 | 5 | 5 | 5 |

(continued)

| | | | TPV (1) | TPV (2) | TPV (3) | TPV (4) | TPV (5) |
|---|---|---|---|---|---|---|---|
| Composition (part) | Component (C) | Mineral oil-based softener | 12 | 42 | 30 | 15 | |
| | | Mineral oil-based softener comprising oil extended rubber | 38 | 24 | 30 | 37.5 | 39 |
| | total | | 100 | 100 | 100 | 100 | 100 |
| | Additive | Cross-linking agent | 1 | 0.75 | 1 | 1 | 1 |
| | | Cross-linking assistant | 1.25 | 0.75 | 1 | 1 | 1 |
| | | Aging preventive | 0.1 | 0.1 | 0.1 | 0.1 | 0.1 |
| | | Unmodified organopolysiloxane (1) | 3 | 1 | 1 | 1 | 1 |
| | | Unmodified organopolysiloxane (2) | 3 | 1 | 1 | 1 | 1 |
| | | Vinyl group-containing organopolysiloxane | 3 | 1 | 1 | 1 | 1 |
| | | Higher fatty acid amide | 0.2 | 0.2 | 0.2 | 0.2 | 0.2 |
| | | Black pigment | 1 | 1 | 1 | 1 | 1 |
| Properties | MFR (190°C, 49N) (g/10 min) | | 50 | 20 | 50 | 10 | 20 |
| | Hardness (Shore A) | | 40 | 26 | 30 | 35 | 65 |
| | Tensile strength at break (MPa) | | 4 | 2.6 | 2.7 | 2.8 | 5.4 |
| | Tensile elongation at break (%) | | 900 | 760 | 640 | 790 | 730 |
| | Compression set (injection-molded sheet) (%) | | 35 | 30 | 30 | 32 | 50 |
| | Dynamic friction coefficient (initial) | | 0.23 | 0.31 | 0.28 | 0.25 | 0.4 |
| | Dynamic friction coefficient (after reciprocating 10,000 times) | | 0.25 | 0.24 | 0.2 | 0.19 | 0.25 |
| | Bleeding | | None | None | None | None | None |

TABLE 2

| | | Example | | | | Comparative Example | | |
|---|---|---|---|---|---|---|---|---|
| | | 1 | 2 | 3 | 4 | 1 | 2 | 3 |
| Combination | Extrusion foam-molded part | TPV (1) | TPV (2) | TPV (3) | TPV (4) | Vulcanized rubber | TPV (5) | TPV (5) |
| | Injection-molded part | TPV (1) | TPV (2) | TPV (3) | TPV (4) | TPV (1) | TPV (1) | TPV (5) |

(continued)

| | | Example | | | | Comparative Example | | |
|---|---|---|---|---|---|---|---|---|
| | | 1 | 2 | 3 | 4 | 1 | 2 | 3 |
| Properties | External appearance | Good | Good | Good | Good | Good | Good | Good |
| | Hardness of extrusion foam-molded member (Asker C) | 55 | 51 | 56 | 60 | 64 | > 100 | > 100 |
| | Expansion ratio of extrusion foam-molded member (times) | 1.3 | 1.2 | 1.2 | 1.3 | 2 | 1.3 | 1.3 |
| | Compression set of extrusion foam-molded member (%) | 28 | 30 | 28 | 31 | 18 | 57 | 57 |
| | Compression set of injection-molded member (%) | 26 | 30 | 27 | 30 | 26 | 27 | 55 |
| | Injection fusibility (bonding strength: MPa) | 1 | 0.8 | 0.9 | 1 | 0.9 | 1.8 | 2.4 |
| | Folding peelability | Good | Good | Good | Good | Good | Bad | Good |
| | Recyclability | Good | Good | Good | Good | Bad | Good | Good |

As it is clear from the results in Table 2, the molded composites of Examples 1 to 4 have a low hardness and low compression set, excellent injection fusibility, and excellent folding peelability in a well-balanced manner. On the other hand, since the molded composite of Comparative Example 1 was a bonded part made of a vulcanized rubber, the composite was unrecyclable. Since the molded composite of Comparative Example 2 employs the first molded part with high hardness, the composite had a high compression set value and bad folding peelability. The first molded part and the second molded part of the molded composite of Comparative Example 3 had high compression set values.

INDUSTRIAL APPLICABILITY

The molded composite of the present invention has excellent compression set, adhesiveness between the molded parts, flexibility, recyclability, and external appearance. Accordingly, the molded composite of the present invention is suitable for weather strips of vehicles. A door weather strip, a trunk weather strip, a luggage weather strip, a roof side rail weather strip, a slide door weather strip, a ventilator weather strip, a slide loop panel weather strip, a front window weather strip, a rear window weather strip, a quarter window weather strip, a lock pillar weather strip, a door glass outer weather strip, and a door glass inner weather strip can be given as examples of the weather strips.

## Claims

1. A molded composite comprising a first molded part which is obtained by extrusion foam molding of an olefin thermoplastic elastomer composition, comprising 5 to 60 mass% of (A) an ethylene-$\alpha$-olefin copolymer rubber having an intrinsic viscosity [$\eta$] of 3.5 to 6.8 dl/g as measured at 135°C in a decalin solvent, 1 to 20 mass% of (B) a polyolefin resin, and 30 to 94 mass% of (C) a mineral oil-based softener ((A) + (B) + (C) = 100 mass%) and obtained by dynamically heat-treating a mixture of at least (A) the ethylene-$\alpha$-olefin copolymer rubber and (B) the polyolefin resin in the presence of a cross-linking agent, at an expansion ratio of 1.2 times or more and a second molded part which is obtained by injection molding of the olefin thermoplastic elastomer composition and/or another thermoplastic elastomer composition and bonded to the surface and/or a cross-sectional surface of the first molded part.

2. The molded composite according to claim 1, wherein the olefin thermoplastic elastomer composition further comprises 0.1 to 10 parts by mass of organopolysiloxane per 100 parts by mass of the total of the ethylene-$\alpha$-olefin copolymer rubber (A), the polyolefin resin (B), and the mineral oil-based softener (C).

3. The molded composite according to claim 1 or 2, wherein the first molded part has an Asker C hardness measured according to JIS K6253 of 80 or less.

4. The molded composite according to any one of claims 1 to 3, wherein the first molded part has a hollow shape.

5. The molded composite according to claim 4, wherein the first molded part with a hollow shape has a compression set of 50% or less after being compressed to 50% for 22 hours at 70°C.

6. The molded composite according to any one of claims 1 to 5, wherein the first molded part has a reinforcing component on the outer surface and/or on the inside.

7. The molded composite according to any one of claims 1 to 6, having any one of the following structures [1] to [4],

[Expression 1]

[1] [(P) − (Q)] m
[2] (P) − [(Q) − (P)] m
[3] (Q) − [(P) − (Q)] m
[4] [(P) − (Q)] n

wherein (P) indicates the first molded part, (Q) indicates the second molded part, m is an integer of 1 or more, and n is an integer of 2 or more.

8. The molded composite according to any one of claims 1 to 7, having an annular structure in which the end of the first molded part bonds to the end of the second molded part.

9. The molded composite according to any one of claims 1 to 8 which is an automotive interior material or an automotive exterior material.

10. The molded composite according to claim 9 which is a weather strip.

11. A process for producing a molded composite comprising a step of obtaining a molded member having an expansion ratio of 1.2 times or more by extrusion foam molding of an olefin thermoplastic elastomer composition, which comprises 5 to 60 mass% of (A) an ethylene-$\alpha$-olefin copolymer rubber having an intrinsic viscosity [$\eta$] of 3.5 to 6.8 dl/g as measured at 135°C in a decalin solvent, 1 to 20 mass% of (B) a polyolefin resin, and 30 to 94 mass% of (C) a mineral oil-based softener ((A) + (B) + (C) = 100 mass%) and obtained by dynamically heat-treating a mixture of at least (A) the ethylene-$\alpha$-olefin copolymer rubber and (B) the polyolefin resin in the presence of a cross-linking agent, a step of placing the resultant molded member in a die cavity so that the surface and/or the cross-sectional surface thereof are exposed, and a step of introducing the olefin thermoplastic elastomer composition and/or another thermoplastic elastomer composition into the die cavity by injection.

FIG.1

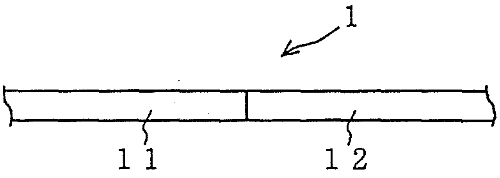


FIG.2

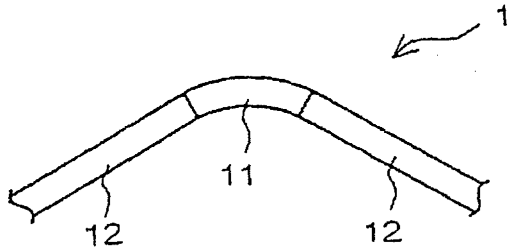


FIG.3

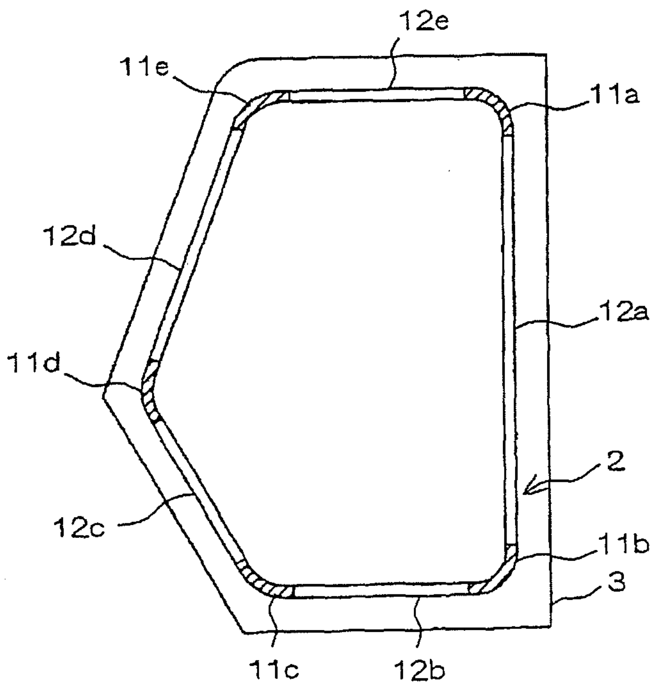

**INTERNATIONAL SEARCH REPORT**

International application No.
PCT/JP2006/325654

A. CLASSIFICATION OF SUBJECT MATTER
*C08L23/16*(2006.01)i, *B29C39/10*(2006.01)i, *B29C65/70*(2006.01)i, *B60R5/04*(2006.01)i, *B60R13/06*(2006.01)i

According to International Patent Classification (IPC) or to both national classification and IPC

B. FIELDS SEARCHED

Minimum documentation searched (classification system followed by classification symbols)
C08L, B29C, B60R5/04, B60R13/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| Y | JP 2000-234038 A (Mitsui Chemicals, Inc.), 29 August, 2000 (29.08.00), Full descriptions | 1-11 |
| Y | JP 11-070544 A (Toyoda Gosei Co., Ltd.), 16 March, 1999 (16.03.99), Full descriptions (Family: none) | 1-11 |
| Y | JP 8-072631 A (Toyoda Gosei Co., Ltd.), 19 March, 1996 (19.03.96), Full descriptions (Family: none) | 1-11 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 March, 2007 (08.03.07) | 20 March, 2007 (20.03.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/325654

C (Continuation). DOCUMENTS CONSIDERED TO BE RELEVANT

| Category* | Citation of document, with indication, where appropriate, of the relevant passages | Relevant to claim No. |
|---|---|---|
| Y | JP 59-222325 A (Kinugawa Rubber Ind. Co., Ltd.), 14 December, 1984 (14.12.84), Full descriptions (Family: none) | 1-11 |
| Y | JP 2003-003023 A (Mitsui Chemicals, Inc.), 08 January, 2003 (08.01.03), Full descriptions (Family: none) | 1-11 |
| Y | JP 11-310673 A (Nishikawa Rubber Co., Ltd.), 09 November, 1999 (09.11.99), Full descriptions | 1-11 |
| A | JP 1-249847 A (Shin-Etsu Chemical Co., Ltd.), 05 October, 1989 (05.10.89), Full descriptions | 1-11 |
| A | JP 10-195227 A (Mitsui Chemicals, Inc.), 28 July, 1998 (28.07.98), Full descriptions | 1-11 |

Form PCT/ISA/210 (continuation of second sheet) (April 2005)

**INTERNATIONAL SEARCH REPORT**
Information on patent family members

International application No.
PCT/JP2006/325654

| | | | |
|---|---|---|---|
| JP 2000-234038 A | 2000.08.29 | JP 3773372 B2 | 2006.05.10 |
| JP 11-310673 A | 1999.11.09 | JP 3684495 B2 | 2005.08.17 |
| JP 1-249847 A | 1989.10.05 | US 4977200 A | 1990.12.11 |
| | | JP 6-057777 B2 | 1994.08.03 |
| JP 10-195227 A | 1998.07.28 | EP 842979 A1 | 1998.05.20 |
| | | CA 2221081 A | 1998.05.15 |
| | | KR 98042463 A | 1998.08.17 |
| | | US 5962543 A | 1999.10.05 |
| | | CN 1185456 A | 1998.06.24 |
| | | JP 3692739 B2 | 2005.09.07 |

Form PCT/ISA/210 (patent family annex) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10175440 A
- JP 2000072935 A
- JP 2002322328 A